# EUROPEAN PATENT APPLICATION

(11) **EP 2 015 207 A1**
(43) Date of publication of application: **14.01.2009**
(21) Application number: 07720309.9
(22) Date of filing: 02.03.2007
(51) Int. Cl.: G06F 19/00, G06K 17/00

(54) **MATERIAL DISTRIBUTION IMAGE TRACING INQUIRY SYSTEM WITH ELECTRONIC TAG SHOOTING FUNCTION**

(30) Priority: 27.03.2006 CN 200610025130
(71) Applicant: Li, Ke, Jing'an District, Shanghai 200041 (CN)
(72) Inventor: Li, Ke, Jing'an District, Shanghai 200041 (CN)
(74) Representative: Korga, Leokadia
(86) International application number: PCT/CN2007/000675
(87) International publication number: WO 2007/109971

(57) **Abstract**

A material distribution image tracing inquiry method with electronic tag shooting function is achieved by the technical solution as follows: shooting some targets with the electronic tag information firstly; when some targets with the electronic tag information was shooting, performing the collecting manage on the electronic tag information synchronously; coding and integrating the above image information and the corresponding electronic tag information, forming the multiple image with the coding information; performing the digital storing on the above image with the multiple coding information, and reducing it into the image with the original electronic tag information through the decoding mode to replay.

## Description

Technical field

The invention relates to a digital video-based information inquiry system and methods, and more specifically, to a logistics monitoring and tracking system having electronic tag video recording capability and methods for monitoring and tracking objects having electronic tags.

Background of the invention

Logistics management is crucial to modern society and has a major impact on society's standard of living. Progressively more people are dependent on logistics and there is constantly increasing requirement on the safety and timeliness of flow and storage of goods.

However, in existing logistics processes, loss of goods is common. Even for large international logistics enterprises having respectable management level, such as DHL, FedEx, UPS, EMS, etc, loss of goods is frequent. Loss of goods during onboard consignment is particularly serious in places such as airports, train stations, ports, etc. Statistics show that every year the loss of goods during logistics processes causes economic losses in excess of 4 billion dollars.

In order to reduce or eliminate this loss, well-developed international logistics enterprises commonly adopted barcode technology to track and monitor goods in recent years. Some technically-superior enterprises even went so far as to use RFID technology or TV monitoring technology.

However, these conventional monitoring technologies and methods have the following drawbacks.

1. The status of goods flow is not reflected or accessible in real time.

2. A video image of goods having barcodes or RFID is not recorded or monitored

3. A video image of goods is not obtained at the same time when barcode or RFID information is obtained.

4. Existing technologies suffer from slow processing speed, high manufacturing cost, and high environmental requirements.

According, much opportunity for improvement remains in this area of logistics

Summary of the invention

Therefore, it is one objective of the invention to eliminate or reduce the drawbacks and problems of the existing technology and, by combining digital recording technology with electronic coding technology, to provide a logistics monitoring and tracking method and system with electronic tag video recording capability having the advantages of easy installation, low cost, and convenient operation.

In order to realize the above objective, the logistics monitoring and tracking method and system with electronic tag video recording capability of the invention comprises the steps of: video recording an object to form a video recording of the object, the object comprising an electronic tag; reading the electronic tag and collecting information contained in the electronic tag; integrating information contained in the electronic tag with the video recording and coding to form an integrated video image; and digitally-storing the integrated video image, and reducing it into the image with the original electronic tag information through the decoding mode to replay.

In a class of this embodiment or in another embodiment, the system further comprises a video image monitoring apparatus operating to video record an object to form a video recording of the object, the object comprising a plurality of electronic tags; an electronic tag reading apparatus operating to identify electronic tag information contained in the electronic tag; an electronic tag video image coder connected to the video image monitoring apparatus and the electronic tag reading apparatus and operating to integrate and code the video image recorded by the video image monitoring apparatus and the corresponding electronic tag information output from the electronic tag reading apparatus, or storing locally the electronic tag information and output the integrated video image information; an electronic tag video image decoding management apparatus connected to the electronic tag video image coder and operating to automatically receive multi-channel integrated video images having electronic tag information from different electronic tag video image coders, to store automatically the tag information after decoding, and to send the corresponding video image and information to the digital video image information storage server and computer for recording and storage, or to receive and decode the electronic tag information from the electronic tag video image coder, and to add the electronic tag information to a video file or a video image corresponding to the digital video image information storage server; and a digital video image information storage server connected to the electronic tag video image decoding management apparatus and operating to real-time store multi-channel video image information having electronic tags, and to inquire and replay a corresponding video information by inputting the electronic tag information via local or network servers.

In a class of this embodiment or in another embodiment, the material distribution image tracing inquiry system is an independent embedded system totally separated from a computer (PC), and the digital video image information storage serve can be replaced by a non-embedded digital hard disk video recording device.

In a class of this embodiment or in another embodiment, the video image monitoring apparatus is a video camera.

In a class of this embodiment or in another embodiment, the electronic tag comprises any information encoded electronically.

In another class of this embodiment or in another embodiment, the system further comprises a video image display monitor.

In another class of this embodiment or in another embodiment, the video image display monitor is a TV monitor or a VGA monitor.

In another class of this embodiment or in another embodiment, the image with the electronic tag information is replayed in a form of a streaming video or played in a form of images frame by frame.

In another class of this embodiment or in another embodiment, the system has a function of automatically pre-recording instantaneous event from between 1 to 1800 seconds before or after the event.

In accordance with the logistics monitoring and tracking method and system with electronic tag video recording capability of the invention, at the time of video recording, the electronic code information is inserted in the form of electronic tag, and the insertion of electronic tag can satisfy instantaneously the stack of multiple video objects and multiplicity of information. The corresponding real-time video can be retrieved according to the recorded electronic tag, and the electronic tag information can be displayed when the video is replayed. The system supports local server inquiry, network server inquiry, and fuzzy inquiry function. In general, the above-mentioned electronic tag refers to any information encoded by means of electronic coding.

In accordance with the logistics monitoring and tracking method and system with electronic tag video recording capability of the invention, the "watermark" encryption anti-counterfeiting technique and goods identification information video image stacking technology are applied in the digital video, so that the validity and uniqueness of the recorded video image information is accurate and secure. Therefore, the video image information is ensured to be valid, specific, real-time, and practical for the users, and thus can enhance the efficiency of goods identification and increase the accuracy and visual immediacy.

Therefore, the system of the invention can be wisely applied in the modern logistics industry, such as in civil transportation of goods, luggage transportation, postal logistics, express deliveries, container transportation, etc, and is applicable to logistics management within large enterprises. With the popularization and improvement of Internet technology, the real-time video image monitoring and tracking of the entire process of goods transportation locally and/or worldwide becomes feasible.

Detailed description of accompanying drawings

FIG. 1 is a schematic diagram of a monitoring and tracking system having electronic tag video recording capability according to one embodiment of the invention;

FIG. 2 is a flow diagram of integrating an electronic tag and a video image code according to one embodiment of the invention;

FIG. 3 is a flow diagram showing decoding of the integrated video image comprising electronic tag information according to one embodiment of the invention;

FIG. 4 is a flow diagram showing retrieving a video image having an electronic tag information associated therewith via a network server according to one embodiment of the invention; and

FIG. 5 is a flow diagram showing inquiring for a video image having electronic tag information associated therewith via a digital video image information storage server according to one embodiment of the invention.

Embodiments

The invention will hereinafter be described further via the embodiments in combination with the drawings.

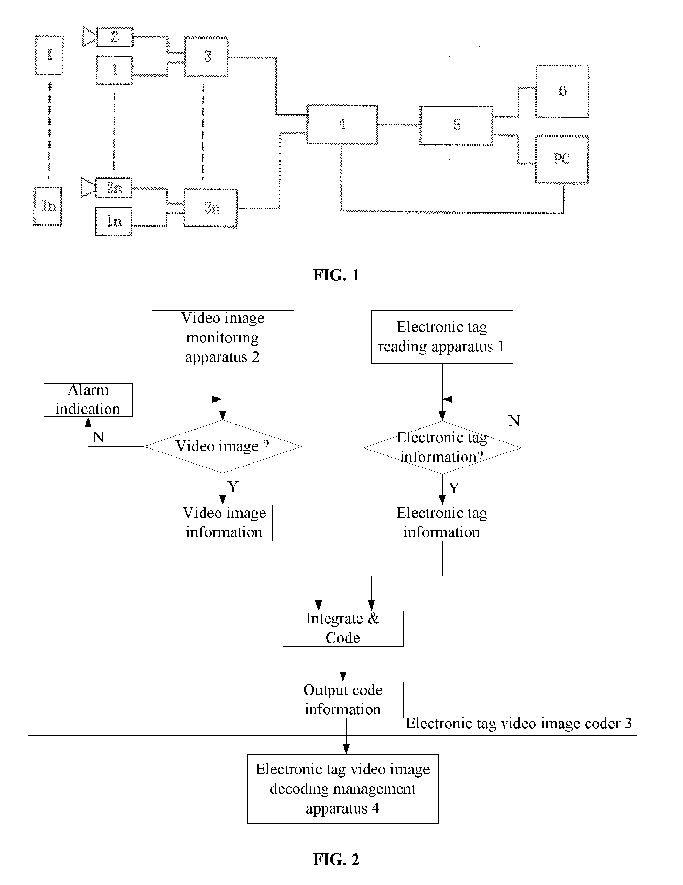

As shown in FIG. 1, a monitoring and tracking system having electronic tag video recording capability comprises a plurality of electronic tag reading apparatuses 1...1 n, a plurality of video image monitoring apparatuses 2...2n, a plurality of electronic tag video image coders 3...3n, an electronic tag video image decoding management apparatus 4, a digital video image information storage server 5, a display monitor 6, and a plurality of personal computers (PC). The system can be a multi-channel system containing one or more channels, and can be used for inquiring video images of multiple objects simultaneously.

The electronic tag reading apparatus 1 is a reader or other apparatus capable of identifying electronic tag identification information (such as a barcode or an RFID tag), such as a barcode scanner, an RFID card reader, or a magnetic card reader, or other apparatus for identifying objects via a microprocessor or a computer.

The video image monitoring apparatus 2 is capable of video recording an image of an object (such as parcel post), and is, without limitation, a common industrial, civil or home video camera, X-ray video camera, infrared video camera, etc.

The electronic tag video image coder 3 is capable of integrating and coding the video image recorded by the video image monitoring apparatus 2 and the corresponding electronic tag information output from the electronic tag reading apparatus 1, and storing locally the electronic tag information and output the integrated video image information. The electronic tag video image coder 3 is a multi-purpose information collecting apparatus, and can respond to and read any electronic code as long as the protocol and/or port is standard or public.

The electronic tag video image decoding management apparatus 4 is capable of automatically receiving multi-channel integrated video images having electronic tag information from different electronic tag video image coders 3, and store automatically the tag information after decoding. Meanwhile, the electronic tag video image decoding management apparatus 4 is also capable of sending the corresponding video image and information to the digital video image information storage server and computer for recording and storage. The electronic tag collecting management apparatus contains multiple communication and associated interfaces, such as RS485, RS232, RS422, UTP, and auxiliary interfaces such as multi-channel I/O input/output ports, one-to-one related video loop distribution output, etc. The electronic tag video image decoding management apparatus 4 can be communicated or associated with other relevant equipment or systems.

The digital video image information storage server 5 is an embedded digital video image storage apparatus, and is capable of real-time storing and pre-recording video image of each channel having electronic tag output from the electronic tag video image decoding management apparatus 4. The term "video pre-recording," as used herein, refers to video recording technology capable of predicting an event that is happening or will happen in a short period of time. For example, if an event happens within 1 second, the system can automatically record video images from between 1 second and 30 minutes before and after an event, and can inquire and replay the corresponding video information by inputting the electronic tag information corresponding to an object in question via local or network servers. The digital video image information storage server 5 can be installed with multiple hard disks.

The display monitor 6 can be a TV monitor, or a VGA monitor. The video image recorded by the system of the invention is a video image having electronic tag information, and can be replayed in real-time in the form of a video, or frame by frame in the form of still video images.

As shown in FIG. 2, the electronic tag reading apparatus 1, the video image monitoring apparatus 2, and the electronic tag video image coder 3 are electronically or electrically connected. Meanwhile, the electronic tag video image coder 3 is capable of detecting automatically the video image monitoring apparatus 2 and the video image monitoring apparatus 2 and indicating, e.g., via audio or visual signals the status of these apparatuses.

After receiving a new electronic tag information, the coder 3 codes and integrates automatically the instantaneous video image at the time the information is generated, and sends the integrated video image information to the electronic tag video image decoding management apparatus 4. The coded and integrated information contains video image information and the corresponding electronic tag information.

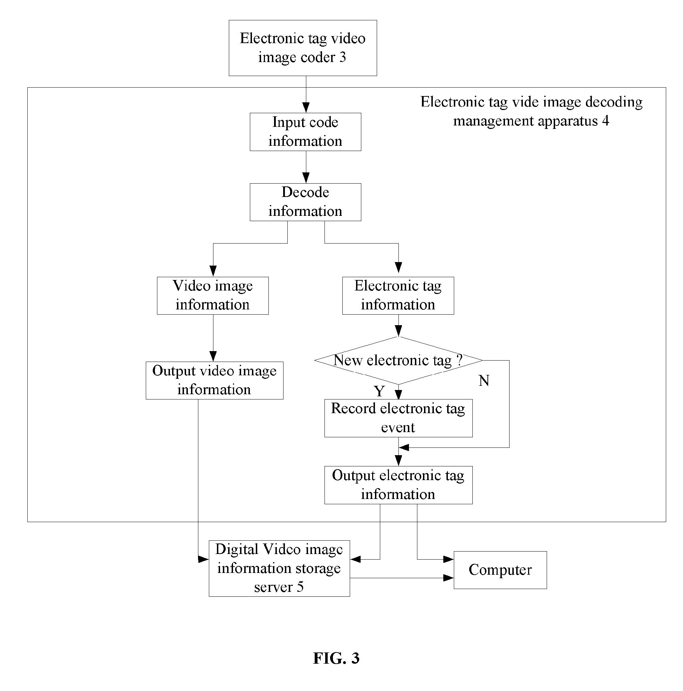

As shown in FIG. 3, decoding of the integrated video image having an electronic tag information comprises:
a) decoding the video image having electronic tag information received from the electronic tag video image coder 3; sending the decoded video image information and electronic tag information to the digital video image information storage server 5 and the computer (PC); and at the same time, recording the electronic tag information in a local server;
b) by remote communication, managing the electronic tag video image coder 3, and assessing whether the electronic tag video image information sent from the electronic tag video image coder 3 is useful or not and whether it is to be recorded and stored; and
c) by remote communication, managing the digital video image information storage server 5, inserting the received real-time electronic tag information into different video channels corresponding to the digital video image information storage server 5, setting the start and end time of video recording of each channel of the digital video image information storage server 5 according to demand.

The system of the invention provides two inquiry methods as described in detail bellow.

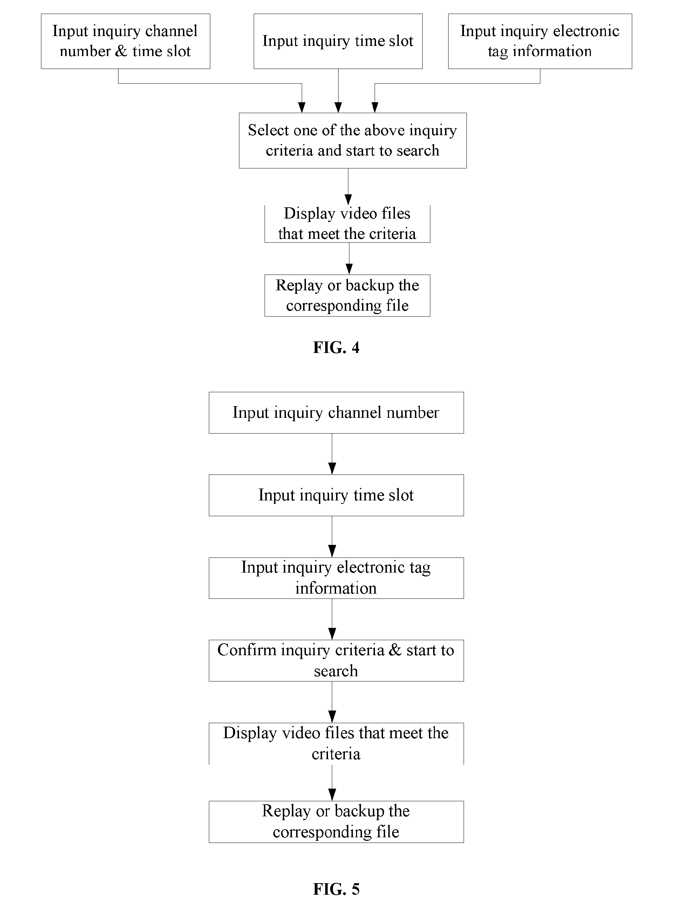

The first method is as shown in FIG. 4, in which a user can inquire through the network by inputting one of the three below-listed inquiry criteria in the provided software:

1) the electronic tag information;

2) the time slot;

3) the channel number and time slot.

The system will then start to search and display the corresponding video image files and then replay or backup the corresponding files according to demand.

The second method is as shown in FIG. 5, in which a user can inquire through the digital video image information storage server 5 by inputting only the electronic tag number or even incomplete number in a certain time slot. Then, the server can search automatically and replay in real time the corresponding video storage file. Moreover, the system can pre-record the electronic tag information instantaneously. Namely, the system of the invention can record an entire process (e.g., passage of an object through the system, or through the entire shipping process) starting from several seconds before the process occurs (e.g., an object passes through the system) for processes that occur in a very short time (such as within 1 second or even shorter). The user can himself set the time of video pre-recording before and after each event.

The logistics monitoring and tracking method and system with electronic tag video recording capability of the invention offers automatic video pre-recording capability for events happening in short time frames. The time of the video pre-recording can be set randomly within a range of, e.g., between 1 and 1800 seconds before and after an event.

The logistics monitoring and tracking method and system of the invention is an independent embedded system totally separated from a computer (PC), characterized in that the digital video image information storage server can be replaced by non-embedded digital hard disk video recording device, which in itself will not change the original function of the system.

## Claims

1. A material distribution image tracing inquiry system with an electronic tag shooting function, comprising steps of
a) video recording an object to form a video recording of said object, said object comprising an electronic tag;
b) reading said electronic tag and collecting information contained in said electronic tag;
c) integrating information contained in said electronic tag with said video recording and coding to form an integrated video image; and
d) digitally-storing said integrated video image, and reducing it into the image with the original electronic tag information through the decoding mode to replay.

2. The material distribution image tracing inquiry system with an electronic tag shooting function of claim 1, further comprising
a video image monitoring apparatus operating to video record an object to form a video recording of said object, said object comprising a plurality of electronic tags;
an electronic tag reading apparatus operating to identify electronic tag information contained in said electronic tag;
an electronic tag video image coder connected to said video image monitoring apparatus and said electronic tag reading apparatus and operating to integrate and code said video image recorded by said video image monitoring apparatus and said corresponding electronic tag information output from said electronic tag reading apparatus, or storing locally said electronic tag information and output said integrated video image information;
an electronic tag video image decoding management apparatus connected to said electronic tag video image coder and operating to automatically receive multi-channel integrated video images having electronic tag information from different electronic tag video image coders, to store automatically said tag information after decoding, and to send said corresponding video image and information to said digital video image information storage server and computer for recording and storage, or to receive and decode said electronic tag information from said electronic tag video image coder, and to add said electronic tag information to a video file or a video image corresponding to said digital video image information storage server; and
a digital video image information storage server connected to said electronic tag video image decoding management apparatus and operating to real-time store multi-channel video image information having electronic tags, and to inquire and replay a corresponding video information by inputting said electronic tag information via local or network servers.

3. The material distribution image tracing inquiry system with an electronic tag shooting function of claim 1 or 2, **characterized in that** said material distribution image tracing inquiry system is an independent embedded system totally separated from a computer (PC), and said digital video image information storage serve can be replaced by a non-embedded digital hard disk video recording device.

4. The material distribution image tracing inquiry system with an electronic tag shooting function of claim 2, **characterized in that** said video image monitoring apparatus is a video camera.

5. The material distribution image tracing inquiry system with an electronic tag shooting function of claim 2, **characterized in that** said electronic tag comprises any information encoded electronically.

6. The material distribution image tracing inquiry system with an electronic tag shooting function of claim 2, further comprising a video image display monitor.

7. The material distribution image tracing inquiry system with an electronic tag shooting function of claim 2, **characterized in that** said video image display monitor is a TV monitor or a VGA monitor.

8. The material distribution image tracing inquiry system with an electronic tag shooting function of claim 2, further said image with said electronic tag information is replayed in a form of a streaming video or played in a form of images frame by frame.

9. The material distribution image tracing inquiry system with an electronic tag shooting function of claim 2, **characterized in that** said system has a function of automatically pre-recording instantaneous event from between 1 to 1800 seconds before or after said event.
